# FASCICULE DE BREVET EUROPEEN

(11) **EP 2 665 911 B1**
(45) Date de publication et mention de la délivrance du brevet: **25.11.2015**
(21) Numéro de dépôt: 12705332.0
(22) Date de dépôt: 13.01.2012
(51) Int. Cl.: F02K 1/72, F02K 1/76

(54) **INVERSEUR DE POUSSÉE POUR TURBORÉACTEUR D'AÉRONEF À NOMBRE DE VERROUS RÉDUIT**
SCHUBUMKEHRVORRICHTUNG FÜR EINEN FLUGZEUG-TURBODÜSENMOTOR MIT EINER GERINGEREN ANZAHL VON RIEGELN
AIRCRAFT TURBOJET ENGINE THRUST REVERSER WITH A REDUCED NUMBER OF LATCHES

(30) Priorité: 17.01.2011 FR 1150342
(43) Date de publication de la demande: 27.11.2013
(73) Titulaire: Aircelle, 76700 Gonfreville L'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2012/050090
(87) Numéro de publication internationale: WO 2012/098328

(56) Documents cités:
- EP-A1- 1 298 309
- US-A- 6 021 636

## Description

La présente invention se rapporte à un inverseur de poussée pour turboréacteur d'aéronef, à nombre de verrous réduit.

Un avion est mu par plusieurs turboréacteurs logés chacun dans une nacelle servant à canaliser les flux d'air engendrés par le turboréacteur, qui abrite également un ensemble de dispositifs assurant diverses fonctions lorsque le turboréacteur est en fonctionnement ou à l'arrêt.

Ces dispositifs peuvent comprendre, notamment, des moyens d'inversion de poussée.

Une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer par l'intermédiaire des pales de la soufflante, un flux d'air dont une partie, appelée flux chaud ou primaire, circule dans la chambre de combustion du turboréacteur, et dont l'autre partie, appelée flux froid ou secondaire, circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de l'air du flux secondaire. Dans cette phase, l'inverseur obstrue la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre une position fermée ou « jet direct » dans laquelle ils ferment ce passage et une position ouverte ou «jet inverse » dans laquelle ils ouvrent dans la nacelle un passage destiné au flux dévié. Ces capots peuvent remplir une fonction de déviation ou simplement d'activation d'autres moyens de déviation.

Dans le cas d'un inverseur de poussée à grilles, la réorientation du flux d'air est effectuée par des grilles de déviation, le capot n'ayant qu'une simple fonction de coulissage visant à découvrir ou recouvrir ces grilles.

La translation du capot mobile s'effectue selon un axe longitudinal sensiblement parallèle à l'axe de la nacelle. Des volets d'inversion de poussée, actionnés par le coulissement du capot, permettent une obstruction de la veine du flux froid en aval des grilles de déviation, de manière à optimiser la réorientation du flux froid vers l'extérieur de la nacelle.

On connaît de la technique antérieure, et notamment du document FR 2 916 426, un inverseur de poussée à grilles dont le capot mobile est monobloc et monté coulissant sur des glissières disposées de part et d'autre du pylône de suspension de l'ensemble formé par le turboréacteur et sa nacelle.

Par « capot monobloc », on entend un capot de forme quasi-annulaire, s'étendant d'un côté à l'autre du pylône sans interruption.

Un tel capot est souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

Le coulissement d'un capot de type « O-duct » entre ses positions « jet direct » et « jet inverse » est classiquement assuré par une pluralité d'actionneurs, de type mécano-électrique (vis sans fin actionnée par un moteur électrique et déplaçant un écrou) ou hydraulique (vérins actionnés par de l'huile sous pression).

Pour éviter un coulissement intempestif d'un tel capot de type « O-duct », qui pourrait avoir des conséquences désastreuses notamment en phase de vol, on prévoit plusieurs systèmes de verrouillage redondants.

Classiquement, on prévoit deux systèmes de verrouillage des actionneurs eux-mêmes, et un système de verrouillage dit « tertiaire », permettant de verrouiller directement le capot coulissant à la poutre de support de la nacelle, appelée couramment « poutre 12 heures » en raison de sa position supérieure par rapport au cercle défini par la section de la nacelle, ou au mât réacteur.

Un tel système de verrouillage tertiaire comprend typiquement deux verrous tertiaires, disposés de part et d'autre de la poutre 12 heures ou du mât réacteur, chaque verrou tertiaire comprenant des moyens de verrouillage du capot coulissant, des moyens de blocage de ces moyens de verrouillage, et des moyens de détection de la position desdits moyens de verrouillage. Un seul verrou disposé d'un côté de la poutre 12 heures ou du mât réacteur est généralement insuffisant pour assurer la rétention du capot mobile en raison de sa souplesse.

La détection de la position des moyens de verrouillage permet de vérifier que le bord supérieur du capot coulissant correspondant au verrou tertiaire concerné est correctement fermé (position de coulissement amont, dite de « jet direct »).

Ainsi, chaque verrou tertiaire remplit d'une part une fonction de verrouillage du capot coulissant, et d'autre part une fonction de détection de la fermeture correcte du bord correspondant de ce capot.

Un tel verrou tertiaire est divulgué par exemple par le document US 6 021 636.

La présente invention a pour but de simplifier ces moyens de verrouillage tertiaire, tant pour réduire les coûts que pour réduire le poids de la nacelle.

On atteint ce but de l'invention avec un inverseur de poussée à grilles selon la revendication 1.

Par directement ou indirectement, il convient de précisément que le capot coulissant pourra notamment être monté coulissant le long du mât par l'intermédiaire de poutre, notamment 12h, supportant des rails de guidage.

Ainsi, dans le système de verrouillage selon l'invention, on utilise un seul verrou tertiaire, ce qui est en réalité suffisant pour assurer le verrouillage tertiaire de l'ensemble du capot coulissant, compte tenu du caractère monobloc de ce dernier.

Quant à la fonction de détection de la fermeture correcte des deux bords supérieurs du capot, assurée dans la technique antérieure par chacun des moyens de détection de la position des moyens de blocage des deux verrous tertiaires, elle est à présent assurée d'une part par les moyens de détection de la position des moyens de blocage de l'unique verrou tertiaire coopérant avec l'un des bords supérieurs du capot coulissant, et d'autre part par les moyens de détection de la fermeture correcte de l'autre bord supérieur du capot coulissant.

En remplaçant ainsi l'un des verrous tertiaires par de simples moyens de détection de fermeture correcte de l'un des deux bords supérieurs du capot coulissant, on simplifie et allège considérablement le système de verrouillage tertiaire. La non-refermeture correcte du côté opposée pouvant être engendrée par une rupture mécanique d'un des autres moyens de rétention du capot mobile, sa détection permet ainsi de détecter la rupture d'un des autres moyens de rétention, et ainsi d'améliorer leur disponibilité.

Suivant d'autres caractéristiques optionnelles de la présente invention :
- ledit unique verrou tertiaire est du type comprenant un crochet monté pivotant sur ladite poutre douze heures, entre une position de verrouillage d'un pêne solidaire dudit capot, et une position de déverrouillage de ce pêne,
- lesdits moyens de blocage comprennent un loquet monté pivotant sur ladite poutre douze heures entre une position de blocage dans laquelle ils maintiennent ledit crochet dans sa position de verrouillage, et une position de déblocage, dans laquelle ils autorisent le passage dudit crochet de sa position de verrouillage à sa position de déverrouillage,
- ledit système de verrouillage comprend un actionneur pour faire passer ledit loquet de sa position de blocage vers sa position de déblocage, et un ressort pour rappeler ledit loquet vers sa position de blocage,
- lesdits moyens de détection de position comprennent un détecteur de position dudit loquet,
- lesdits moyens de détection de fermeture correcte de l'autre bord supérieur dudit capot comprennent :
   - une rainure formée dans la zone dudit autre bord supérieur, cette rainure s'écartant de ladite poutre vers l'aval dudit capot et présentant, dans sa partie amont, une zone élargie,
   - une bielle montée coulissante sur ladite poutre douze heures, dont une première extrémité est guidée dans ladite rainure, et dont l'autre extrémité comprend un doigt apte à pénétrer dans une première encoche formée dans ledit loquet, de manière à maintenir ce loquet en position de déblocage, et
   - des moyens élastiques, rappelant ladite bielle vers ledit loquet,
- ledit loquet comprend en outre une seconde encoche apte à recevoir ledit doigt, de manière à maintenir ledit loquet en position de blocage.

D'autres caractéristiques et avantages de la présente invention apparaîtront à la lumière de la description qui va suivre, et à l'examen des figures ci-annexées, dans lesquelles :
- la figure 1 représente, en perspective, une nacelle pour moteur d'aéronef, équipée d'un inverseur de poussée à capot coulissant monobloc,
- les figures 2 à 10 illustrent le fonctionnement d'un verrou tertiaire de la technique antérieure, situé dans la zone Z de la figure 1, et
- les figures 11 à 13 illustrent les différentes étapes de fonctionnement d'un système de verrouillage selon l'invention.

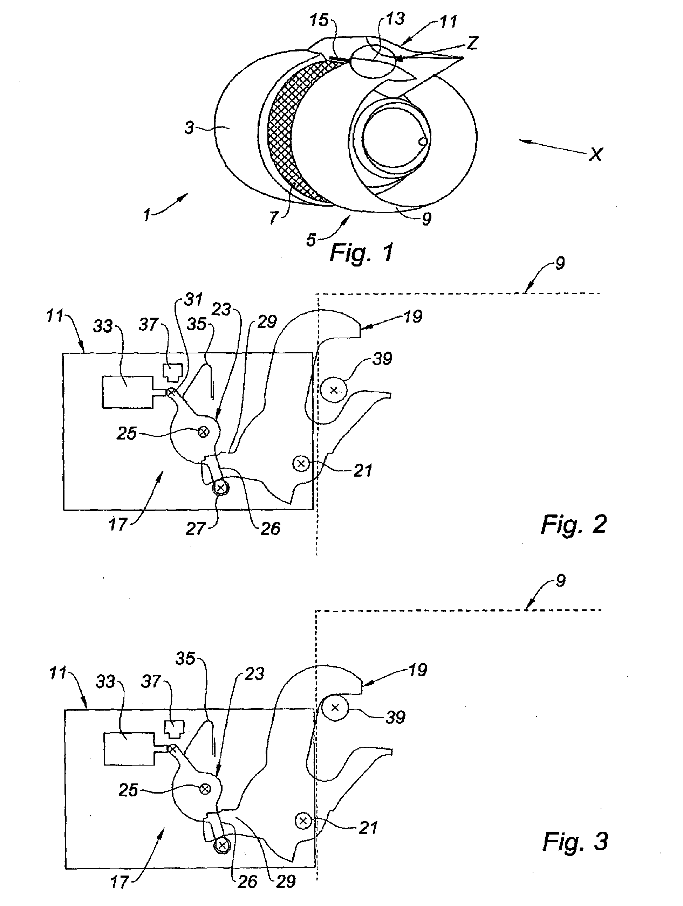

On se reporte à présent à la figure 1, sur laquelle on a représenté de manière schématique une nacelle 1 pour turboréacteur de moteur d'aéronef.

Cette nacelle comporte, dans sa partie amont, un capotage 3, définissant l'entrée d'air de la nacelle d'une part, et entourant la soufflante du turboréacteur d'autre part.

En aval de ce capotage 3, se trouve une structure d'inverseur de poussée à grilles 5, comprenant notamment des grilles d'inversion de poussée 7, un capot coulissant 9, et le mât réacteur 11.

Le capot 9 est monté coulissant sur le mât réacteur 11 entre la position visible à la figure 1, dite de « jet inverse », et une position amont dite de « jet direct ».

La position « jet inverse » permet de renvoyer vers l'amont de la nacelle, à travers les grilles 7, une partie du flux d'air froid circulant à l'intérieur de la nacelle, et ainsi contribuer au freinage de l'aéronef à l'atterrissage.

Dans la position « jet direct », les grilles 7 sont recouvertes par le capot 9, de sorte que l'intégralité de l'air froid circulant à l'intérieur de la nacelle est éjecté en aval de cette nacelle, et correspond aux situations de croisière et de décollage de l'aéronef.

Dans le cas présent, le capot coulissant 9 présente une structure monobloc, c'est-à-dire qu'il est formé d'un seul ensemble sensiblement annulaire, dont les bords supérieurs 13 sont montés coulissants sur des rails respectifs 15, disposés de part et d'autre du mât réacteur 11.

Comme cela est connu en soi, on prévoit un verrou tertiaire disposé dans la zone Z de la figure 1, permettant de verrouiller le coulissement du capot mobile 9 par rapport au mât réacteur 11, en dehors des phases où l'on a besoin de mettre en oeuvre la fonction d'inversion de poussée.

On va à présent rappeler brièvement, sur la figure 2 à 10, le mode de fonctionnement d'un tel verrou.

Sur l'ensemble de ces figures, le capot coulissant 9 sera représenté de manière symbolique en pointillés.

En se reportant à la figure 2, on peut voir que le verrou tertiaire 17 de la technique antérieure comprend un crochet 19 monté pivotant autour d'un axe 21 solidaire du mât réacteur 11.

Un loquet de blocage 23 est lui-même monté pivotant autour d'un axe 25 sur le mât réacteur 11.

Ce loquet de blocage 23 comporte une queue 26 terminée par un galet 27, cette queue étant elle-même susceptible de coopérer avec une queue 29 du crochet 19, de manière à empêcher la rotation de ce dernier.

Le loquet 23 comporte en outre une tête 31 susceptible d'être poussée par un actionneur 33 tel qu'un solénoïde.

Un ressort 35 pousse la tête 31 en direction de l'actionneur 33, c'est-à-dire de manière à faire pivoter le loquet 23 dans le sens anti horaire.

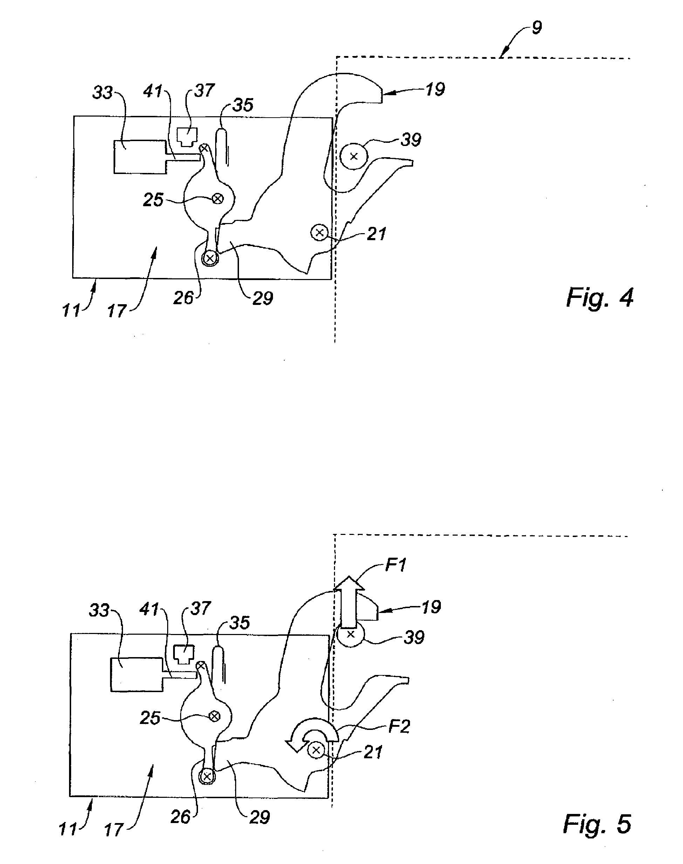

Des moyens de détection 37, tels qu'un détecteur magnétique ou optique, permet de détecter la présence de la tête 31 du loquet 23, et ainsi de discriminer la position de ce loquet visible à la figure 2 par rapport à la position de ce loquet visible par exemple aux figures 4 et 5.

A noter enfin que le crochet 19 coopère avec un pêne 39 solidaire du capot coulissant 9.

Le mode de fonctionnement du verrou tertiaire qui vient d'être décrit est le suivant.

Lorsque l'inverseur de poussée 5 se trouve en position « jet direct » (décollage et croisière), le verrou tertiaire 17 se trouve dans la position représentée à la figure 2.

Dans cette position, le crochet 19 bloque la translation du pêne 39 vers le haut de la figure, correspondant à une translation vers l'amont du capot coulissant 9.

A noter cependant que l'on autorise un léger jeu dans les mouvements relatifs du pêne 39 et du crochet 19, pour prendre en compte les tolérances des différentes pièces, ainsi que les petits déplacements normaux de ces pièces les unes par rapport aux autres.

Lorsque le crochet 19 est en position verrouillée, le pêne 39 peut ainsi se déplacer jusqu'à la position aval extrême visible à la figure 3.

A noter que, dans la figure 2 comme dans la figure 3, la queue 26 du loquet 23 est engagée sur celle 29 du crochet 19, empêchant ainsi toute rotation de ce crochet.

Lorsqu'on souhaite procéder à l'ouverture du capot coulissant 9, c'est-à-dire donc à le faire coulisser vers l'aval de la nacelle, c'est-à-dire encore vers le haut des figures ci-annexées, on commence par agir sur l'actionneur 33, de manière à provoquer l'allongement de son doigt d'actionnement 41.

Ce doigt 41 agissant sur la tête 31 du loquet 23, a pour effet de faire pivoter celui-ci dans le sens horaire, et ainsi de libérer la queue 29 du crochet 19, comme cela est visible à la figure 4.

On peut alors agir sur les vérins qui permettent de faire coulisser le capot 9 en aval de la nacelle, de sorte que le pêne 39 vient en butée sur le crochet 19, comme cela est visible à la figure 5, et indiqué par la flèche F1.

Sous l'effet de cette butée, le crochet 19 pivote dans le sens anti-horaire, comme cela est indiqué par la flèche F2.

Du fait de ce pivotement, le pêne 39 échappe au crochet 19, comme cela est indiqué par la flèche F3.

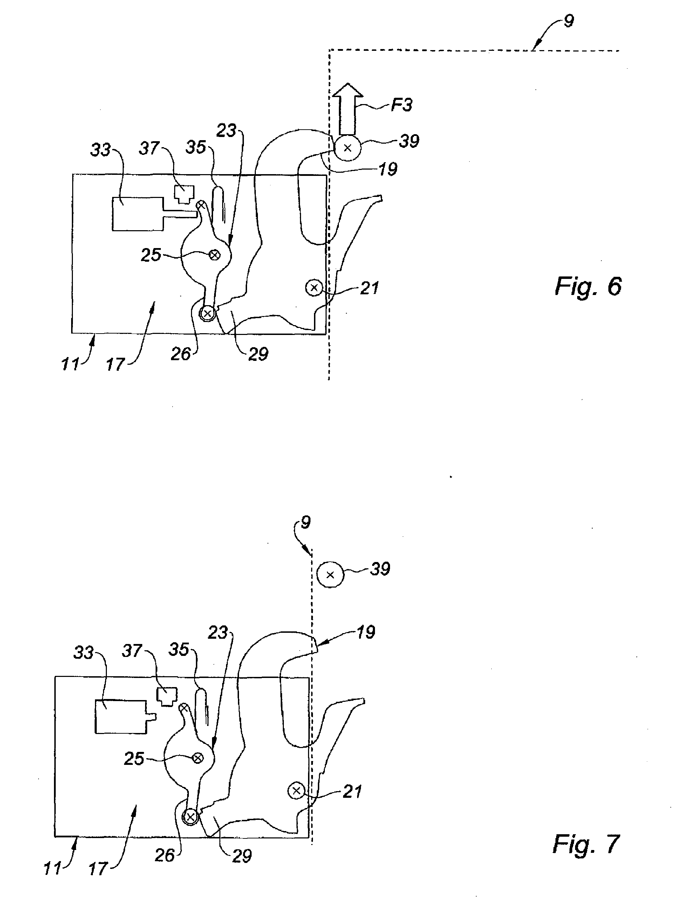

Une fois que le coulissement complet du capot 9 a été effectué vers l'aval, on se retrouve dans la configuration de la figure 7, où le pêne 39 est éloigné en aval du crochet 19.

A noter que pendant les phases 6 et 7, l'extrémité de la queue 26 du loquet 23 empêche le pivotement du crochet 19 dans le sens horaire.

Lorsque l'on souhaite refermer le capot coulissant 9, de manière à repositionner l'inverseur de poussée 5 dans sa position « jet direct », on rétracte les vérins d'actionnement de ce capot coulissant, ce qui a pour effet de ramener le pêne 39 au contact d'une partie arrondie 43 du crochet 19, comme cela est indiqué par la flèche F4.

Sous l'effet de ce contact, le crochet 19 est entraîné en rotation horaire, comme cela est indiqué par la flèche F5.

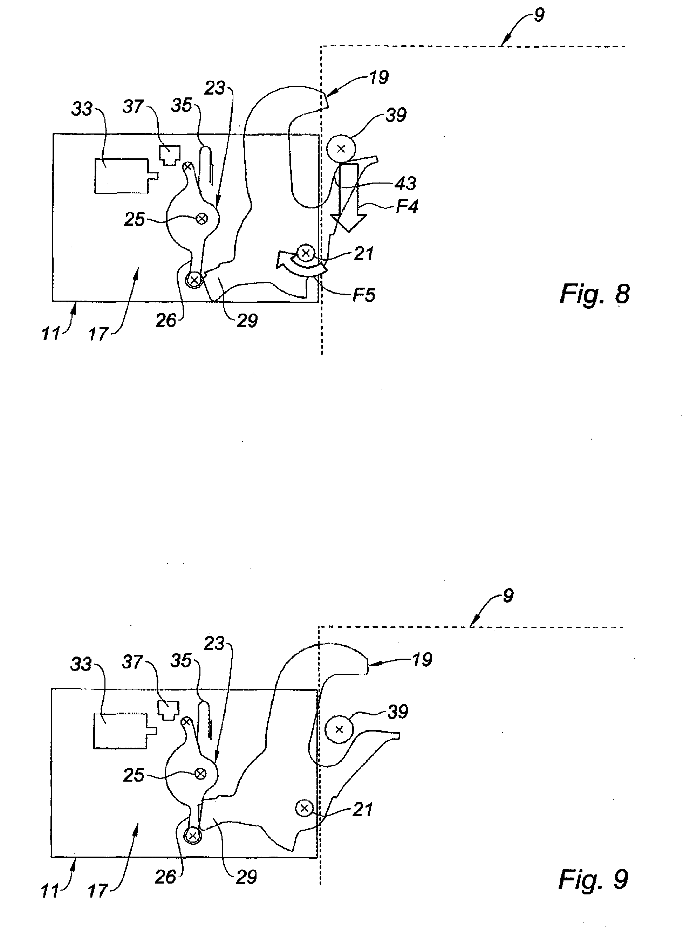

La queue 29 du loquet 23 peut alors échapper à celle 29 du crochet 19, et ce crochet peut ainsi revenir à sa positon initiale, comme cela est indiqué à la figure 9.

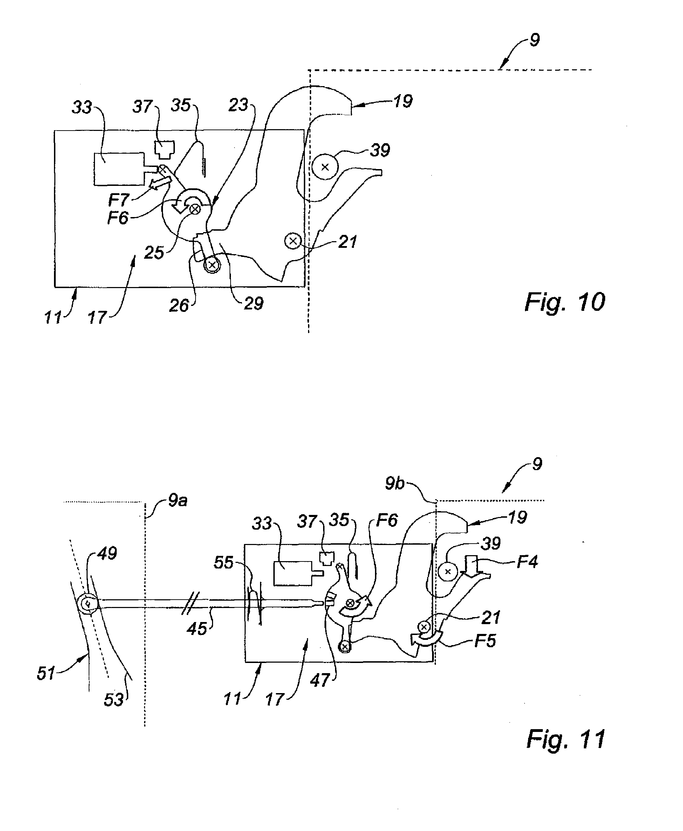

Sous l'effet du ressort 35, le loquet 23 pivote alors dans le sens horaire F6, comme cela est indiqué à la figure 10, et la tête 31 de ce loquet 23 revient en vis-à-vis du détecteur 37 en poussant le doigt d'actionnement 41 à l'intérieur du corps de l'actionneur 33, comme cela est indiqué par la flèche F7.

On comprend donc que le loquet 23 a d'une part une fonction de verrouillage de la rotation du crochet 19, et d'autre part, une fonction de vérification de la fermeture correcte du capot coulissant 9.

En effet, tant que la tête 31 de ce loquet 23 n'est pas revenue en vis-à-vis du détecteur 37 (configuration de la figure 10), cela signifie que le crochet 19 n'est lui-même pas revenu dans sa position de fermeture, et donc que le pêne 39 n'est lui-même pas revenu dans sa positon initiale correspondant à la position « jet direct » de l'inverseur de poussée 5.

Lorsque l'on souhaite utiliser un unique verrou tertiaire 17 pour l'ensemble du capot coulissant 9, c'est-à-dire un verrou tertiaire disposé sur un seul des côtés du mât réacteur 11, on comprend que la fonction de verrouillage de l'ensemble du capot coulissant 9 peut être assurée, du fait du caractère monobloc de ce capot coulissant.

En revanche, la fonction de détection des fermetures correctes des deux bords supérieurs de ce capot coulissant ne peut être réalisée avec un unique verrou tertiaire du type de celui qui vient d'être décrit, correspondant à l'art antérieur.

C'est la raison pour laquelle l'invention apporte un perfectionnement à ce verrou tertiaire, en fournissant des moyens de détection de la fermeture correcte de l'autre bord supérieur du capot coulissant, c'est-à-dire du bord de ce capot coulissant ne coopérant pas avec ce verrou tertiaire.

Pour comprendre en quoi consiste et comment fonctionne l'invention, on se reporte à présent plus particulièrement aux figures 11 à 13.

Sur ces figures, le capot coulissant 9 est également représenté en pointillés, mais on peut voir à présent les deux bords supérieurs 9a et 9b du capot coulissant, coopérant respectivement avec les rails 15 disposés de part et d'autre de la poutre 12 heures 11.

Ainsi, en supposant que l'on regarde la nacelle 1 par l'arrière selon la direction longitudinale, c'est-à-dire comme indiqué par la flèche X (voir figure 1), le bord 9a du capot mobile 9 est le bord supérieur droit de ce capot mobile, et le bord 9b de ce capot mobile 9 est le bord supérieur gauche de ce capot mobile.

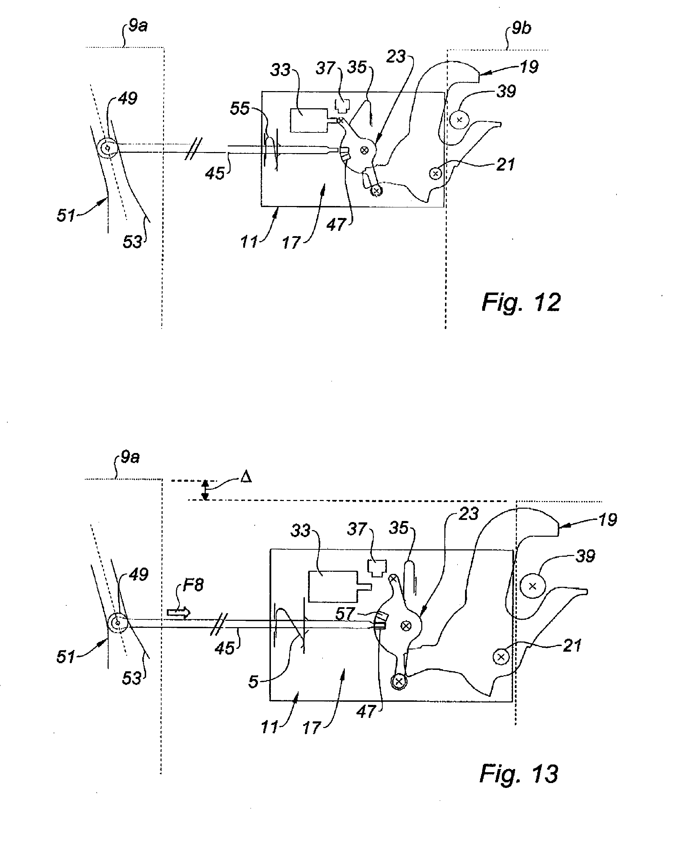

En plus de l'ensemble des pièces qui ont été décrites précédemment, on peut voir que le système de verrouillage selon l'invention comprend une bielle 45 montée coulissante transversalement au mât réacteur 11 entre une position visible à la figure 11, dans laquelle elle est écartée d'une première encoche 47 formée dans le corps du loquet 23, et la position visible à la figure 13, dans laquelle cette bielle pénètre à l'intérieur de cette première encoche 47, le loquet 23 se trouvant en position de déblocage.

A son autre extrémité, la bielle 45 comporte un galet rotatif 49, guidé par une rainure 51 formée dans le bord supérieur 9a du capot coulissant 9, cette rainure s'écartant du mât réacteur 11 vers l'aval de l'inverseur de poussée, c'est-à-dire vers le haut de la feuille de dessin, comme cela est visible sur les figures 11 à 13.

D'autre part, dans sa partie amont, cette rainure 51 comporte une partie élargie formant entonnoir 53.

Des moyens élastiques 55, comprenant un ou plusieurs ressorts, rappellent de manière élastique la bielle 45 à l'intérieur de la première encoche 47.

Le mode de fonctionnement de ce mécanisme va à présent être décrit.

Lorsque le capot coulissant 9 revient vers sa positon de fermeture, comme cela est indiqué par la flèche F4, le crochet 19 est ramené dans sa position de verrouillage, comme cela est indiqué par la flèche F5.

Si le bord 9a du capot coulissant 9 se ferme bien en même temps que le bord 9b de ce capot coulissant, le galet 49 est conduit en aval de la rainure 51, ce qui a pour effet d'écarter l'extrémité de la bielle 45 de la première encoche 47 du loquet 23, à l'encontre des moyens élastiques 55, comme cela est représenté à la figure 11.

Du fait de cet écartement, le loquet 23 peut pivoter librement selon la flèche F6, et ainsi revenir à sa positon de blocage, comme cela est indiqué à la figure 12, permettant de réaliser l'immobilisation parfaite du capot coulissant 9 en position « jet direct ».

Le retour du loquet 23 dans sa positon de blocage sous l'effet du ressort 35 est détecté par le détecteur 37, envoyant ainsi une information de fermeture correcte des deux bords 9a et 9b du capot coulissant 9, à la centrale de commande.

Si en revanche seul le bord 9b se referme correctement, mais pas le bord 9a, par exemple en raison de la défaillance de l'un des vérins d'actionnement du capot coulissant 9, ce bord supérieur 9a demeure légèrement en retrait d'une certaine longueur Δ, en aval du bord supérieur 9b, comme cela est illustré à la figure 13.

Du fait de l'inclinaison de la rainure 51 par rapport à l'axe de la nacelle, cette rainure exerce un effort de poussée de la bielle 45 en direction de la première encoche 47, à l'encontre des moyens élastiques 55, comme cela est indiqué par la flèche F8 de la figure 13.

La bielle 45, ainsi introduite dans cette première encoche 47, a pour effet de bloquer la rotation du loquet 23, en dépit du retour du crochet 19 à sa positon verrouillée : le détecteur 37 peut ainsi relever que la tête 31 du loquet 23 n'est pas revenue à sa positon initiale, et envoyer une information de défaut de fermeture du bord supérieur droit 9a du capot coulissant 9, aux calculateurs traitant habituellement cette information.

On comprend donc que le mécanisme qui vient d'être décrit permet, avec un seul verrou tertiaire et un seul détecteur, de relever un défaut de fermeture de l'un quelconque des deux bords supérieurs 9a, 9b du capot coulissant 9.

Bien entendu, la présente invention n'est nullement limitée aux modes de réalisation décrits et représentés.

C'est ainsi que l'on peut prévoir également une deuxième encoche 57 formée dans le loquet 23, disposée de manière que la bielle 45 puisse empêcher la rotation de ce loquet 23 à partir de sa position bloquée représentée à la figure 12.

Une telle deuxième encoche 57 permet, en cas de rupture de l'un des vérins agissant sur la moitié droite du capot coulissant 9, de bloquer tout actionnement possible de l'ensemble de ce capot coulissant.

En effet, la rupture d'un ou plusieurs vérins d'actionnement de la moitié droite du capot coulissant 9 a pour effet de provoquer un déplacement analogue au déplacement Δ de la figure 13 de cette moitié droite du capot coulissant, ce qui provoque une pénétration de la bielle 45 à l'intérieur de la deuxième encoche 57, et donc le blocage du crochet 19 dans sa positon verrouillée.

On peut de la sorte réaliser une interdiction mécanique de tout actionnement du capot coulissant 9 lorsque certains au moins de ces vérins sont défaillants, afin de rendre plus facile leur détection.

## Revendications

1. Inverseur de poussée à grilles comprenant un mât réacteur (11), un capot monobloc (9) monté coulissant, directement ou indirectement, sur ce mât (11) entre une position « jet direct » et une position « jet inverse », et un système de verrouillage de ce capot sur ledit mât (11), ce système comprenant :
- un unique verrou tertiaire (17), disposé d'un côté dudit mât réacteur (11), pour verrouiller le bord supérieur correspondant (9b) dudit capot (5), ce verrou tertiaire (17) comprenant des moyens (19) de verrouillage du capot coulissant (9), des moyens de blocage (23) de ces moyens de verrouillage, et des moyens de détection (37) de la position de ces moyens de verrouillage, et
- **caractérisé en ce que**: ledit système comprenne également, des moyens (45, 47, 51) disposés au moins partiellement de l'autre côté dudit mât réacteur pour détecter la fermeture correcte de l'autre bord supérieur (9a) dudit capot (9) lorsque ledit verrou tertiaire est en position fermée.

2. Inverseur de poussée selon la revendication 1, dans lequel ledit unique verrou tertiaire (17) est du type comprenant un crochet (19) monté pivotant sur ledit mât réacteur (11), entre une position de verrouillage d'un pêne (39) solidaire dudit capot (9), et une position de déverrouillage de ce pêne (39).

3. Inverseur de poussée selon l'une des revendications 1 ou 2, dans lequel lesdits moyens de blocage comprennent un loquet (23) monté pivotant sur ledit mât réacteur (11) entre une position de blocage dans laquelle ils maintiennent ledit crochet (19) dans sa position de verrouillage, et une position de déblocage, dans laquelle ils autorisent le passage dudit crochet (19) de sa position de verrouillage à sa position de déverrouillage.

4. Inverseur de poussée selon la revendication 3, dans lequel ledit système de verrouillage comprend un actionneur (33) pour faire passer ledit loquet (23) de sa position de blocage vers sa position de déblocage, et un ressort (35) pour rappeler ledit loquet (23) vers sa position de blocage.

5. Inverseur de poussée selon l'une des revendications 3 ou 4, dans lequel lesdits moyens de détection de position comprennent un détecteur (37) de position dudit loquet (23).

6. Inverseur de poussée selon l'une quelconque des revendications 3 à 5, dans lequel lesdits moyens de détection de fermeture correcte de l'autre bord supérieur (9a) dudit capot comprennent :
- une rainure (51) formée dans la zone dudit autre bord supérieur, cette rainure s'écartant dudit mât réacteur (11) vers l'aval dudit capot (9) et présentant, dans sa partie amont, une zone élargie (53),
- une bielle (45) montée coulissante transversalement audit mât réacteur poutre douze heures (11), dont une première extrémité est guidée dans ladite rainure (51), et dont l'autre extrémité comprend un doigt apte à pénétrer dans une première encoche (47) formée dans ledit loquet (23), de manière à maintenir ce loquet (23) en position de déblocage, et
- des moyens élastiques (35), rappelant ladite bielle (45) vers ledit loquet (23).

7. Inverseur de poussée selon la revendication 6, dans lequel ledit loquet (23) comprend en outre une seconde encoche (57) apte à recevoir ledit doigt, de manière à maintenir ledit loquet (23) en position de blocage.

## Patentansprüche

1. Schubumkehrer mit Gittern, der einen Reaktormast (11), eine einstückige Haube (9), die gleitend direkt oder indirekt auf diesem Mast (11) zwischen einer Position "direkter Strahl" und einer Position "umgekehrter Strahl" montiert ist, und ein Verriegelungssystem dieser Haube auf dem Mast (11) umfasst, wobei das System Folgendes umfasst:
- einen einzigen tertiären Riegel (17), der auf einer Seite des Reaktormasts (11) angeordnet ist, um den entsprechenden oberen Rand (9b) der Haube (9) zu verriegeln, wobei dieser tertiäre Riegel (17) Mittel (19) zum Verriegeln der gleitenden Haube (9), Blockierungsmittel (23) dieser Verriegelungsmittel und Erfassungsmittel (37) der Position dieser Verriegelungsmittel umfasst, und
- **dadurch gekennzeichnet, dass** das System auch Mittel (45, 47, 51) umfasst, die mindestens teilweise auf der anderen Seite des Reaktormasts angeordnet sind, um das korrekte Schließen des anderen oberen Rands (9a) der Haube (5) zu erfassen, wenn der dritte Regel in geschlossener Position ist.

2. Schubumkehrer nach Anspruch 1, wobei der einzige tertiäre Riegel (17) des Typs ist, der einen Haken (19) umfasst, der auf dem Reaktormast (11) zwischen einer Verriegelungsposition eines Riegels (39), der fest mit der Haube (9) verbunden ist, und einer Entriegelungsposition dieses Riegels (39) schwenkend montiert ist.

3. Schubumkehrer nach einem der Ansprüche 1 oder 2, wobei die Blockierungsmittel eine Klinke (23) umfassen, die auf dem Reaktormast (11) zwischen einer Blockierungsposition, in der sie den Haken (19) in seiner Verriegelungsposition halten, und einer Löseposition, in der sie das Durchgehen des Hakens (19) von seiner Verriegelungsposition zu seiner Entriegelungsposition erlauben, schwenkend montiert sind.

4. Schubumkehrer nach Anspruch 3, wobei das Verriegelungssystem einen Stellantrieb (33) umfasst, um die Klinke (23) von ihrer Blockierungsposition zu ihrer Löseposition übergehen zu lassen, und eine Feder (35), um die Klinke (23) zu ihrer Blockierungsposition zurückzustellen.

5. Schubumkehrer nach einem der Ansprüche 3 oder 4, wobei die Positionserfassungsmittel einen Detektor (37) der Position der Klinke (23) umfassen.

6. Schubumkehrer nach einem der Ansprüche 3 bis 5, wobei die Erfassungsmittel des korrekten Schließens des anderen oberen Rands (9a) der Haube Folgendes umfassen:
- eine Rille (51), die in der Zone des anderen oberen Rands ausgebildet ist, wobei sich diese Rille von dem Reaktormast (11) nach stromabwärts der Haube (9) abspreizt und in ihrem stromaufwärtigen Teil eine erweiterte Zone (53) aufweist,
- ein Pleuel (45), das quer zu dem Reaktormastbalken Position zwölf Uhr (11) gleitend montiert ist, von dem ein erstes Ende in der Rille (51) geführt ist und von dem das andere Ende einen Finger umfasst, der geeignet ist, in eine erste Kerbe (47) einzudringen, die in der Klinke (23) derart ausgebildet ist, dass diese Klinke (23) in Löseposition gehalten wird,
und
- elastische Mittel (35), die den Pleuel (45) zu der Klinke (23) zurückstellen.

7. Schubumkehrer nach Anspruch 6, wobei die Klinke (23) außerdem eine zweite Kerbe (57) umfasst, die geeignet ist, den Finger derart aufzunehmen, dass die Klinke (23) in Blockierungsposition gehalten wird.

## Claims

1. A cascade-type thrust reverser comprising an engine nacelle mast (11), an integral cowl (9) slidably mounted, directly or indirectly, on this mast (11) between a "direct jet" position and a "reverse jet" position, and a system for locking this cowl on said mast (11), this system comprising:
- a single tertiary lock (17), disposed on a side of said engine nacelle mast (11), for locking the corresponding upper edge (9b) of said cowl (5), this tertiary lock (17) comprising means (19) for locking the sliding cowl (9), means (23) for blocking these locking means, and means (37) for detecting the position of these locking means, and
**characterized in that**: said system also comprises
- means (45, 47, 51) disposed at least partially on the other side of said engine nacelle mast for detecting the correct closing of the other upper edge (9a) of said cowl (9) when said tertiary lock is in closed position.

2. The thrust reverser according to claim 1, wherein said single tertiary lock (17) is of the type comprising a hook (19) pivotally mounted on said engine nacelle mast (11), between a position of locking of a bolt (39) secured to said cowl (9), and a position of unlocking this bolt (39).

3. The thrust reverser according to any of claims 1 or 2, wherein said blocking means comprise a latch (23) pivotally mounted on said engine nacelle mast (11) between a blocking position in which they maintain said hook (19) in its locking position, and an unblocking position, in which they allow the passage of said hook (19) from its locking position to its unlocking position.

4. The thrust reverser according to claim 3, wherein said locking system comprises an actuator (33) to make said latch (23) switch from its blocking position towards its unblocking position, and a spring (35) for returning said latch (23) towards its blocking position.

5. The thrust reverser according to any of claims 3 or 4, in which said position detecting means comprise a position detector (37) of said latch (23).

6. The thrust reverser according to any one of claims 3 to 5, wherein said means for detecting the correct closing of the other upper edge (9a) of said cowl comprise:
- a groove (51) formed in the area of said other upper edge, this groove spacing apart from said engine nacelle mast (11) downstream of said cowl (9) and having, in its upstream part, a widened area (53),
- a rod (45) slidably mounted transversally to said engine nacelle mast twelve o'clock beam (11), of which a first end is guided in said groove (51), and of which the other end comprises a finger capable of penetrating in a first notch (47) formed in said latch (23), in such a manner as to maintain this latch (23) in unblocking position, and
- elastic means (35), returning said rod (45) towards said latch (23).

7. The thrust reverser according to claim 6, wherein said latch (23) further comprises a second notch (57) able to receive said finger, in such a manner as to maintain said latch (23) in blocking position.
